# EUROPEAN PATENT APPLICATION

(11) **EP 4 391 483 A2**
(43) Date of publication of application: **26.06.2024**
(21) Application number: 23218928.2
(22) Date of filing: 20.12.2023
(51) Int. Cl.: H04L 47/2408, H04L 47/2441, H04L 47/2475, H04L 47/2483

(54) **SYSTEM AND METHOD FOR TRAFFIC FLOW CLASSIFICATION**

(30) Priority: 21.12.2022 IN 202211074371; 22.12.2022 IN 202211074445
(71) Applicant: Sandvine Corporation, Waterloo, Ontario N2L 3V3 (CA)
(72) Inventor: PALANISAMY, Anuram, 641109 Coimbatore (IN); HAVANG, Alexander, 211 20 Malmo (SE); MITTAL, Ambuj, 560103 Bengaluru (IN); WALDENBORG, Anders, 211 20 Malmo (SE); KULSHRESTHA, Vishal, 560076 Bengaluru (IN)
(74) Representative: Ipey

(57) **Abstract**

A method and system for classifying a traffic flow. The method including: initializing a database with packet parameters; identifying a new flow; determining packet parameters associated with the new flow; determine whether the packet parameters match any previously stored packet parameters in the database; if the packet parameters match, determining an application classification for the traffic flow. The system including: a server profiling module configured to initialize a database; and an application module configured determine packet parameters associated with the new flow, determine whether the packet parameters match any previously stored packet parameters. A method and system for detecting a change in the classification of an application and/or content in a traffic flow. The method includes determining a change in the application behavior; detecting a change in a content category of the application, providing an updated traffic action based on the detected change.

## Description

### RELATED APPLICATIONS

The present application claims priority to Indian Patent Application No. 202211074444 filed December 22, 2022, and to Indian Patent Application No. 202211074371 filed December 21, 2022.

### FIELD

The present disclosure relates generally to computer network traffic. More particularly, the present disclosure relates to a system and method for classification of a traffic flow in a computer network. In some cases, the classification is be based on server profiling, in other cases the system and method is detect a change in the classification.

### BACKGROUND

Service Providers, including Internet Service Providers (ISP) want to know what type of traffic flows over their network and what type of applications the subscribers use. Further, to provide subscribers with appropriate levels of Quality of Experience (QoE) and/or Quality of Service (QoS), it is beneficial to understand the applications and content of the applications that flow through the network. In particular, different policies apply to different types of applications and/or content.

Users often experience various levels of QoE, which differ based on application and the content delivered by the application. Operators of computer networks try to provide high levels of QoE across various applications, but as applications are able to provide a variety of different types of traffic flows, some traffic flows are more affected by latency, loss, or other issues. Operators wish to provide traffic management based on the type of content within the flow to allow for congestion management as well as maintain high levels of QoE across users. Further, applications provide new features and updates that are in a different or new content category than the application previously provided.

Different applications and various types of application content have different requirements on the network. Therefore, the same network conditions give a user different QoE depending on the application they are using. Further, an ISP or network operator provide specific policies for various types of traffic flow to try to improve QoS and QoE. As such, it is beneficial to identify the application and the content category of the traffic flow and it is preferable to do so early in the flow to apply any appropriate policy as early as possible.

As such, there is a need for an improved method and system for classifying the application of a traffic flow in the network and detecting a change in the classification of the application and/or the content of a computer traffic flow.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provided a method for classifying a traffic flow including: initializing a database with packet parameters; identifying a new flow; determining packet parameters associated with the new flow; determine whether the packet parameters match any previously stored packet parameters in the database; if the packet parameters match, determining an application classification for the traffic flow.

In some cases, the packet parameters include server's Internet Protocol (IP) address and port number.

In some cases, the method further includes: determining if the previously stored packet parameters require revalidating; reviewing the previously stored packet parameters with current traffic flows; and updating the previously stored packet parameters with parameters from the current traffic flows.

In some cases, the previously stored packet parameters are revalidated at a predetermined time interval.

In some cases, the previously stored packet parameters are revalidated after a predetermined number of matched traffic flows.

In some cases, the previously stored packet parameters are determined in a lab setting and verified against real time traffic flows.

In another aspect, there is provided a system for classifying a traffic flow, the system including: a server profiling module configured to initialize a database with packet parameters; and an application module configured to identify a new flow, determine packet parameters associated with the new flow, determine whether the packet parameters match any previously stored packet parameters in the database and determine an application classification for the traffic flow.

In some cases, the server profiling module is configured to determine packet parameters comprising server's Internet Protocol (IP) address and port number.

In some cases, the server profiling module is configured to: determine if the previously stored packet parameters require revalidating; review the previously stored packet parameters with current traffic flows; and update the previously stored packet parameters with parameters from the current traffic flows.

In another aspect, there is provided a method for detecting a change in the classification of an application and/or content in a traffic flow, the method including: determining an application change in the application behavior; detecting a category change in a content category of the application; and providing an updated traffic action based on the detected change.

In some cases, detecting an application change or a content change includes: determining packet flow parameters associated with the traffic flow; and detecting a change in the traffic flow parameters associated with the traffic flow.

In some cases, the packet parameters include: volume of traffic, data rate, location, region, timestamps.

In some cases, detecting a change comprises detecting an increase or decrease in bit rate, packet rate or connections count.

In still another aspect, there is provided a system for classifying application and content in a computer network, the system including: an application module configured to determine changes in the application behavior; a content module configured to determine parameters associated with the content that provides for a change in a content category; and a traffic action module configured to update traffic actions based on the detected change.

In some cases, the application module and content module are configured to: determine packet flow parameters associated with the traffic flow; and detect a change in the traffic flow parameters associated with the traffic flow.

In some cases, the application module and content module are configured to determine the packet parameters include: volume of traffic, data rate, location, region, timestamps.

In some cases, the application module and content module are configured to detect a change including detecting an increase or decrease in bit rate, packet rate or connections count.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Figure 1 illustrates a diagram of a computer network architecture including an embodiment of a system for detecting a change in the application and content classification;
Figure 2 illustrates a system for detecting a change in the application and content classification according to an embodiment;
Figure 3 illustrates the flow of the method for detecting a change in the application and content classification according to an embodiment;
Figure 4 is a flow chart of a method for detecting a change in application and/or content classification according to an embodiment;
Figure 5 illustrates an embodiment of a method for classifying applications of a traffic flow;
Figure 6 illustrates an embodiment of a system for application classification using server profiling;
Figure 7 illustrates an environment illustrating a plurality of content servers according to an embodiment;
Figure 8 is a flow chart of a method for application classification using server profiling according to an embodiment; and
Figure 9 is a flow chart illustrating a method for application classification according to an embodiment.

### DETAILED DESCRIPTION

In the following, various example systems and methods will be described to provide example embodiment(s). It will be understood that no embodiment described below is intended to limit any claimed invention. The claims are not limited to systems, apparatuses or methods having all of the features of any one embodiment or to features common to multiple or all of the embodiments described herein. A claim may include features taken from any embodiment as would be understood by one of skill in the art. The applicants, inventors or owners reserve all rights that they may have in any invention disclosed herein, for example the right to claim such an invention in a continuing or divisional application and do not intend to abandon, disclaim or dedicate to the public any such invention by its disclosure in this document.

Generally, the present disclosure provides a method and system for detecting a change in application and/or content classification of a traffic flow. The system is configured to monitor traffic flow behavior of applications to determine if there is a change. By reviewing the traffic flow parameters, the system and method are configured to detect a change in traffic flow and/or content of the application based on the traffic flow parameters. The system and method can then update the content categories associated with the noted application or provide additional or different traffic policies to the traffic flow.

Further, the present disclosure provides a method and system of classifying a traffic flow using server profiling. The system is initialized with a database having server data associated with applications. It has been found that content providers often use a dedicated server or a set of servers per application. In cases where a plurality of applications are offered by a company, the applications may share servers, but usually the IP+Port or IP+Multiple Ports or IP+Multiple Ports + TransportProtocol used for a particular application are often set to be the same. This data can be used to provide for a less intensive CPU and memory cost for classifying applications as detailed herein. When a new traffic flow is received, the system is configured to determine packet parameters including, for example, server IP, port and protocol. The system is configured to compare this information to previously stored and classified packet parameters to determine if the new traffic flow can be classified, for example, as being of an application type, without the use of more intensive application recognition methods.

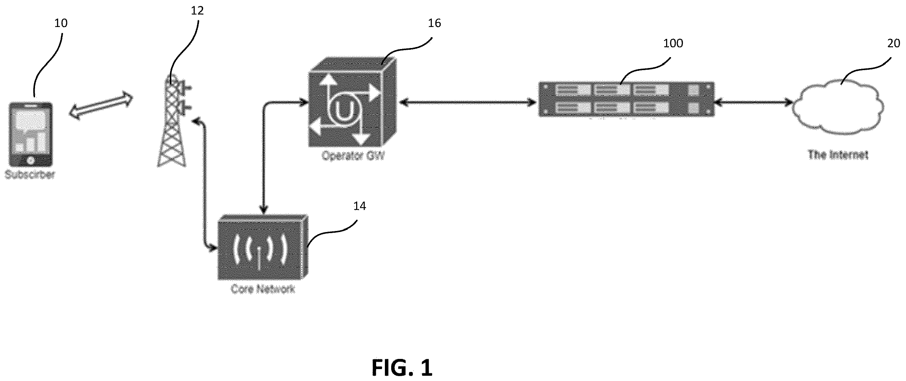

Figure 1 illustrates an environment for an embodiment of the system. A subscriber, using a user device 10, initiates a traffic flow with a base station 12. The traffic flow is transmitted to and from a core network 14 from the base station. The traffic flow is seen and directed by the operator network 16 and reviewed and classified by a system 100. In some embodiments, the system 100 is included as a component of a network device which resides between the operator's gateway and the Internet 20. Generally speaking, the system 100 is intended to reside within the operator's or Internet Service Provider's (ISP's) network 16. It will be understood that embodiments of the system and method detailed herein are intended to be employed over any type of computer network, for example, fixed line, mobile, satellite or other computer network.

Generally, the system 100 can be configured to be transparent to users. It will be understood that figure 1 illustrates a high-level network architecture and that a computer network includes further aspects not illustrated.

As noted, embodiments of the system 100 for classification and detecting a change in classification is intended to reside in the core network. In any case, the system 100 is intended to be in a location where the system is able to access the data noted herein. It will be understood that in some cases the system may be a physical network device or may be a virtual network device. The system may also be distributed over a number of physical or virtual devices. It will be understood that the system may be used on any IP based networking system, for example, Wi-Fi based, mobile data networks like GPRS, CDMA, 4G, 5G, LTE, satellite based, WLAN based networks, fixed line broadband fiber optic networks as well as on virtual private networks.

Embodiments of the system and method disclosed herein are intended to detect change in application and/or content category due to change in application and/or server. Embodiments of the system and method are also be configured to detect new applications and any addition and/or removal of a content category to an application.

It has been noted that applications evolve over time. For example, the following are some reasons for the evolution, namely, new versions of applications often have new or improved features, underlying platform evolution is required applications to adapt (for example, an iOS^{™} update by Apple^{™} on iPhones^{™} can require and/or benefit application update to use new API's); there may be a new platforms (for example, Android^{™} TV, LG^{™} TV), there can be bug fixes for functionality or security issues, or the like. Further, there are often changes in the application on the user side, on the server side, or on both sides. These changes are beneficial to track and review for application recognition and content category recognition.

As many applications use encrypted data transfers, application and content recognition often require sophisticated mechanisms, like Signature matching, Machine Learning, or the like, to recognize application and content categories. Conventional methods typically involve looking into headers and payloads of the packets to determine what type of data is being carried and what is the application, but this is not possible with encrypted headers and payloads.

Applications and content categories carried by an application can change over time. It is important to be able to determine that the content categories carried within an application is changed, or the application itself has changed its behavior. There may be altogether new applications and new content categories that are not matched wotj what was previously done by the application. In order to correctly apply policies based on content type, embodiments of the system and method detailed herein are intended to determine when there is a change in the application or content type.

Conventional methods tended to require manual updates or internal testing to determine whether there is a change in the application or content of the application. Internal testing can require engineers to run the application in question to capture the packets from the application to build a machine learning model based on the change. Changes may need to be updated only for one platform or for each platform, so testing takes time and require manual review. Conventional methods often require testing on many devices as only certain devices may see new content. As a specific example, an old TV may not get updates anymore for Netflix^{™}, and Netflix company ensures that these devices can connect to their network using older protocol.

A problem with these conventional methods is that there are too many things for which there is a need to watch. There are a lot of applications and checking each application is not practical due to high resource and test requirement. Sometimes applications are distributed across countries and the behavior differs across regions. Because the usage of applications can change over time (grow or reduce), it is important to distinguish this aspect from change in application and/or content category.

Embodiments of the system and method are intended to detect change in application behavior as far as classification is concerned; detect change in content category for the application; and detect addition or removal of a content category in the application.

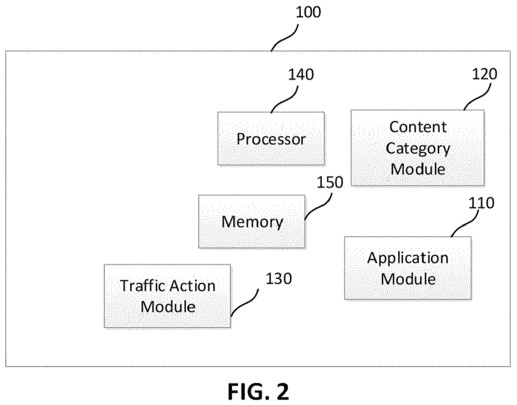

Figure 2 illustrates an embodiment of a system for detecting a change in application and content for traffic flows. The system is intended to include an application module 110, a content category module 120, a traffic action module 130, at least one processor 140 and at least one memory component 150. The system is generally intended to be distributed and reside in the data plane. A central processing unit or the control processor may be configured to execute the instructions stored in the memory component in order for the modules to execute their functions.

The application module 110 is configured to determine an application and application category associated with a traffic flow or set of flows. The application module 110 is configured to review the traffic patterns and traffic flow parameters to determine the application associated with the traffic flow. Depending on, for example the application, the traffic flow for that application is intended to be reviewed periodically by the application module 110, for example every 10 seconds, every 10 minutes, every 24 hours, or the like.

The content category module 120 is configured to determine the content category associated with the application and any changes or additions to possible content categories associated with various applications. Together the application module 110 and content category module 120 is configured to provide for change visualization as detailed herein.

The traffic action module 130 is configured to provide for traffic actions associated with the content category and application of a traffic flow. In some cases, the traffic action module is configured to provide for policies to be applied based on the content. In some cases, the traffic action module 130 is configured to provide for a change in policy once a change in application or category content has been noted.

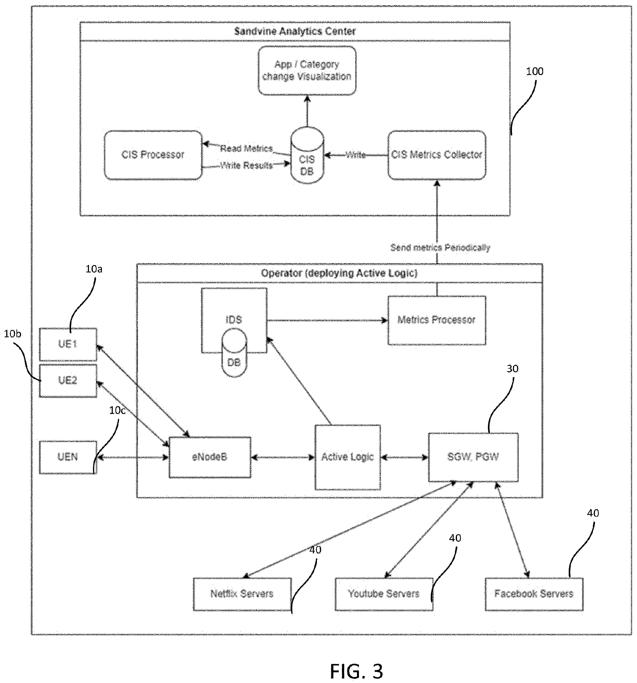

Figure 3 illustrates a plurality of mobile devices that connect to operators' network in a 4G LTE system. It will be understood that this provides an example and other networks may be used. The mobile devices of the subscribers 10a, 10b and 10c, use different applications within the same device and there is often different applications associated with each device. These mobile devices typically connect to the application specific servers 40 for data transfer, via for example, Serving Gateways, Packet Data Network Gateways, and other network devices 30. For example, Netflix^{™}, YouTube^{™} and Facebook^{™} servers are shown in this example. The data transfer passes through the system where the process of Application and Content category recognition takes place and suitable metrics are also intended to be generated.

The metrics are intended to be passed to a processor, for example a metric processor, that can provide information locally and can also export the processed metrics to, for example, a Central Intelligence System (CIS) or Analytics center associated with the application module and content module. Here the data is received by CIS Metrics Collector and is stored by, for example, writing the metrics to a database. A CIS Processor is configured to periodically process this data and determine the analysis result. Note that the data may be collected from a plurality of operators so that comparison across regions could also be carried out. This data could be received from various different operators / networks in different regions and network type (like 5G, 4G, fixed line or satellite) to CIS Metric collector.

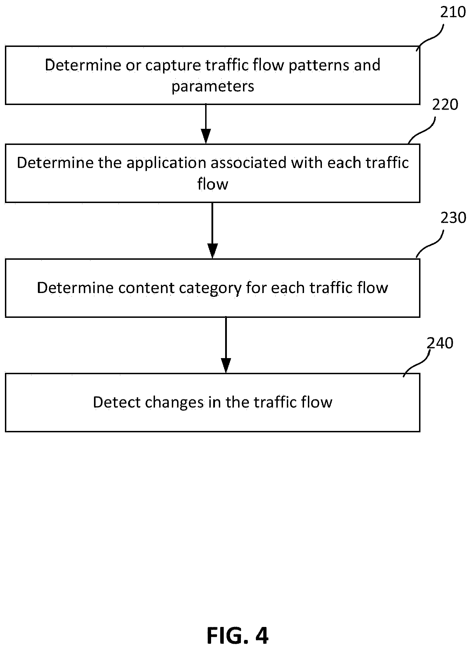

Figure 4 is a flow chart illustrating the method for detecting a change in application and/or content. At 210, traffic flow patterns and parameters are captured (sometimes referred to as the relevant data) for a plurality of traffic flows. At 220, application recognition is performed on each of the plurality of traffic flows, by the application module, to determine the application associated with each of the traffic flows. At 230, the content module is configured to identify the content category using a content category recognition feature. Various associated parameters that are found for the above recognition are intended to be stored in a database. These parameters include, for example, volume of traffic, data rate, location, region, timestamps, application, content category and the like. The Content module identifies what kind of content is delivered to the network connected devices, for example if a subscriber is watching Video in Facebook application. The system is configured to identify Facebook using the application module and Video is identified using the Content module.

In some cases, parameters for unclassified applications are also stored in the database. These parameters include, for example, volume of traffic, data rate, location, region, timestamps and the like. The Server profile (for example, the IP, Port, Protocol of the server) is also intended to be recorded for each flow. Further, the Subscriber's device IP may be recorded for each flow.

After parameters associated with the flow are determined, the system is configured to detect changes, at 250. The changes may be detected by segregating the type of increase and then investigating what that increase corresponds to as a change. In an example, there is an increase and/or decrease in bit rate, packet rate, connections count and other different network characteristics. This detection is done per region. As the number of subscribers can increase or decrease, the measurements are normalized, for example, normalized to per subscriber, per session, per application or the like.

For an application, if there is reduction in traffic going to a known set of server profiles this change are indicate that either application has changed, or its content category is not being recognized. If this is noted, the system is configured to further review the reduction of the traffic.

If there is an overall increase in the total volume of unrecognized traffic and a proportional reduction in the overall volume of recognized traffic it can indicate a change in traffic flow. This type of change can be monitored per application, per application category, for all applications and/or application categories, or the like. This change could mean that either the application has changed, or its content category has changed.

If there is unrecognized traffic seen to increase from a set of subscriber device Internet Protocol (IP) addresses when a particular application is in use on these devices. Since application recognition detects start and end of application traffic, it knows the time when the application was in use. If the normalized volume of unrecognized traffic increases then is seen in the past, then there is change in content categories of the application. In this the case, the content can be updated to the new content category.

The system is configured to further monitor for a change in volume of content category carried in an application in a given duration, which can vary in range. This type of change could imply that the application has changed, or the content category has changed.

The system is configured to also monitor for whether the proportion of traffic carried in different content categories of an application changes. This change could indicate that the application may have changed, a new content category has been added, an existing category has been deleted, or the like.

If the system notes that any changes have happened in a region and not in a different region, the change might be region specific change. If it is across regions, it may be a common change.

Embodiments of the system deployment can be done either in inline mode (traffic passes through the system) or in offline mode also called monitoring mode (a copy of traffic sent to the system, but it is not forwarded). The system may be deployed as a probe and may reside in various operators' networks. The probes are configured to see all or a subset of the traffic flowing through the operators' network.

The system is configured to collect information from both types of sources, deployments within operators' network and a probe deployment. When there is a significant change seen in the volume of traffic, the application and/or content category that has changed is detected in CIS. Using the metrics associated with the application, the system is configured to capture the traffic for selected applications (usually by sampling for a predetermined number of subscribers) and then analyze the files to see why the proportion has changed. The system is also configured to reproduce the changed traffic by running the application on its own and capturing the application's traffic. In some cases, this process could be a manual test of the application or an automated test of the application using that specific changed category. This comparison can be used to identify the exact nature of a change and update or create new models to capture the change. The models are intended to provide an update so that the changes are correctly classified to detect Application and content categories.

Presented herein are various different actions based on the detected change, if an application traffic change is detected and during an automation test showing that some amount of the application traffic is not classified as expected. There will be a signature update request and it will result in an updated signature bundle. It will be understood that there could be various different actions for different change detections.

Further, with the increase of encrypted traffic travelling through operators' network, the process of classifying the traffic into an application category is becoming more Central Processing Unit (CPU) intensive. Conventionally, classifying the traffic using traditional signature pattern, heuristics and/or machine learning methods require high CPU usage. Until a flow is identified, the data relevant for classifying the flow is stored per flow in conventional solutions. This data consumes vast amounts of memory.

It has been noted that classifying a traffic flow consumes significant CPU and memory until the flow is classified. Most of the classification happens in or around the 4th packet (the first data packets in Transmission Control Protocol (TCP)), in this case until the flow is classified it is definitely a CPU and memory intensive task.

It has been determined that classification of application, category of application, and application activity by looking at network traffic is very intensive compared to normal network node execution. The more sophisticated the method of classification, which is often preferred in order to achieve superior accuracy, the more resources typically would be needed. Hence, there is often attempts to accelerate the classification process. With more and more traffic being encrypted, the classification methods are becoming more and more complex and CPU intensive resulting in a cost of processing increase. The following are the existing methods of classification that can be used to classify traffic flows: using fields in the IP and/or Protocol specific Header, signatures using a state machine; heuristics models; Machine learning models; and the like.

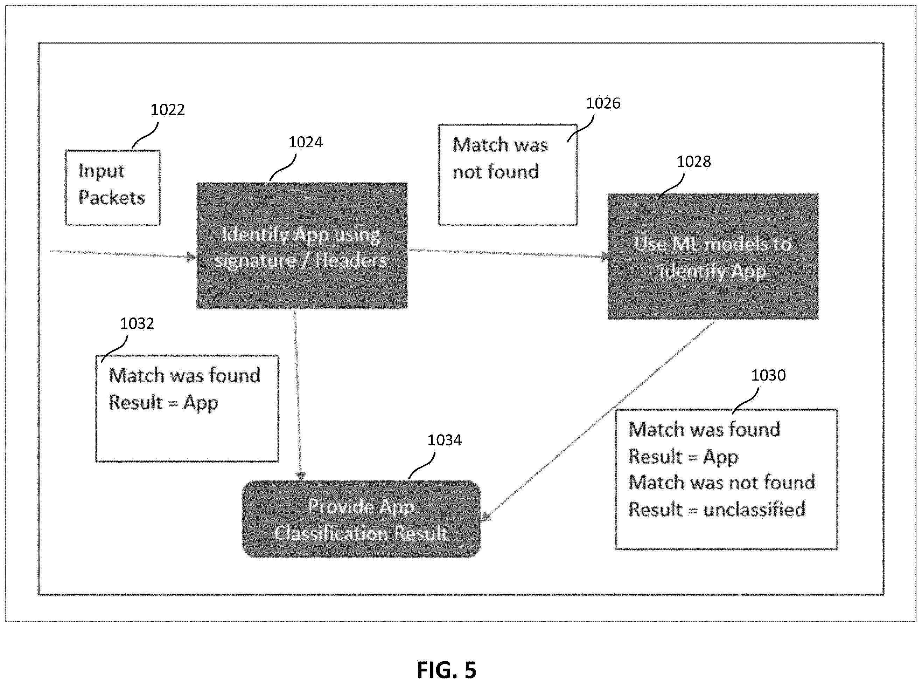

Figure 5 illustrates a typical Deep Packet Inspection system offering application recognition, where there are multiple stages of processing. The first stage uses packet headers and signatures for Application Recognition, then is checked to see if any correlation based classification is possible. The final stage uses heuristics and/or machine learning if the earlier stage could not concretely identify the application. If recognition succeeds, the application recognized for the given flow/flows is provided to consumer. It is possible that none of them was able to recognize application for the given flow, in which case the flow is marked unclassified.

As shown in figure 5, packets are received via an input, at 1022, and the packet inspection system is configured to use packet headers and signatures for Application Recognition, at 1024. If a match is not found, at 1026, the second stage uses machine learning, at 1028. If recognition succeeds at either 1030 or 1032, the application recognized for the given flow/flows is provided to consumer, at 1034. The consumer is likely to be the network operator or the like. It is possible that neither strategy will be able to recognize application for the given flow, in which case the flow is marked unclassified.

Typically, application identification is started at the beginning of the flow until the time application is identified with high confidence. In some cases, application identification may not be completed until mid flow depending on how each application behaves. There is a cost of processing associated with Signatures and machine learning, with the overall pipeline required for machine learning being expensive in significant CPU usage and memory. Usually, the cost of machine learning based recognition is much higher than signature based recognition.

The signature based recognition and machine learning methods may themselves have a plurality of steps, where the output of one step is used to decide what is the next step to execute. There may be a plurality of interactions before the application can be successfully identified and classified.

Embodiments of the system and method detailed herein are intended to use server profiling to reduce the cost of traffic flow identification and classification. In particular, it has been noted that a server used for an application or category of applications tends to serve the same content for at least some predetermined period of time. As such, embodiments of the system and method detailed herein are intended to provide for classification based on Server IP and port, which is intended to classify a large percent of traffic flows via for example a look up table thus using minimal or reduced CPU and memory cost. In particular, it has been noted that a significant amount of network traffic is associated with a limited number of content providers.

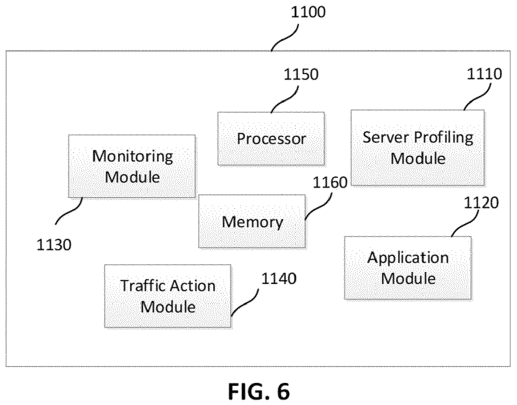

Figure 6 illustrates a system for classifying application with server profiling for traffic flows. The system is intended to include a server profiling module 1110, an application module 1120, a monitoring module 1130, a traffic action module 1140, at least one processor 1150 and at least one memory component 1160. The system is generally intended to be distributed and reside in the data plane. A central processing unit or the control processor 1150 is configured to execute the instructions stored in the memory component 1160 in order for the modules to execute their functions.

The server profiling module 1110 is configured to profile the server via for example the server's Internet Protocol (IP) address and port number for a predetermined number of flows. The server profiling module 1110 is configured to build a look up table or other data repository to determine the content provider or application associated with a particular server.

The Application module 1120 is configured to determine packet parameters, for example server IP data for a new data flow. The Application module 1120 is configured to do a lookup or query the server profiling module 1110 or data repository created by the server profiling module to associate the data flow with an application.

The monitoring module 1130 is configured to monitor server information in the lookup table to determine if there are any traffic pattern or data changes to the servers listed in the lookup table. If a change is noted the server profiling module 1110 is configured to re-profile the server to determine if any updates to the lookup table are required.

The traffic action module 1140 is configured to perform traffic actions as defined in various policies or rules associated with the application, application type and/or operator.

The system may be initialized with a set of known servers or may be initialized with traffic flows currently being reviewed by the system. In particular, once a classification run has been executed on a flow and all the results are run (typically at the end of the flow lifetime), these results can be useful for future lookups. The system is able to use previous classification results from flows to create server profiles that are intended to be able to identify new flows at a lower cost. Depending on the type of classification (for example, application, traffic category, or the like), this could be a lookup on the server IP, server IP + port, server IP + IP.protocol (L4) + port, or the like to narrow down the possible results for the classification or to classify the flow.

The system is configured to profile a plurality of servers in various ways. In some cases, the system is configured to profile servers in a lab and generate a list of these by verifying the applications that are being served. In this case, the system is configured to also use Application Recognition probes deployed across the network to collect this information. Then this data is stored in a database file and provided to the system.

In another case, when a system is initiated, the system is configured to use conventional methods to identify application and records the server profile. If the system determines that the same server profile is being used N times, then the system is configured to store this server profile into the database. The system is configured to validate periodically to check if any server profile is still valid.

In still other cases, the system may use a combination of the two methods. For example, if Facebook added a new server, then its server would not have an entry in the database provided with an initialized setup method. The system instead evaluates the server profile after the system has been initiated. If found that the new server is serving Facebook, then the server profile information is added to the database.

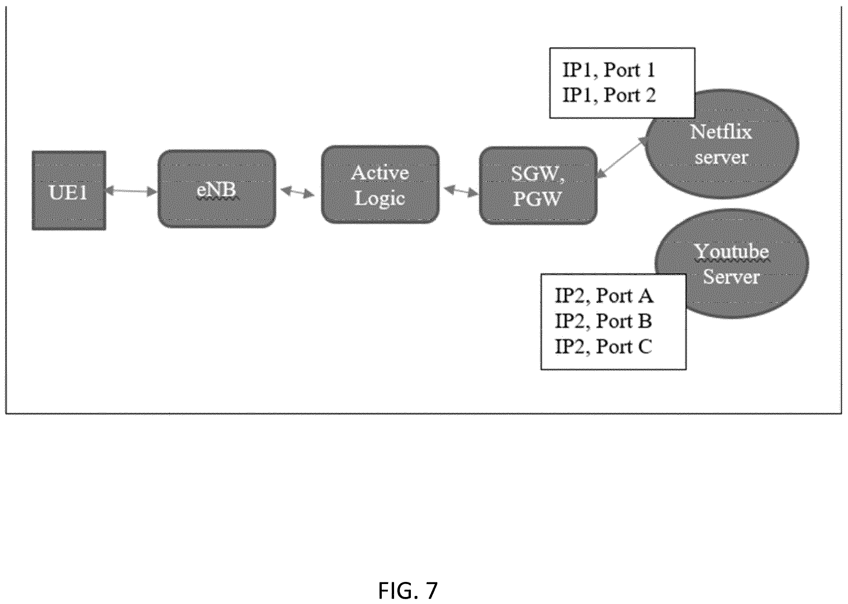

Figure 7 illustrates a User Equipment, UE1, accessing Netflix server. It can be seen from the figure that various Netflix and YouTube servers have been identified. As such, the system is able to classify the flow to UE1 based on the server and port information from the flow an as detailed herein.

Embodiments of the system and method detailed herein are intended to save classification costs. If the classification cost for a flow F is C, and 1/N flows are classified are classified via the system for server profiling, on, for example: IP:Port and/or transport layer endpoint, then the CPU cost savings for the system is C/N. C and N are likely to vary depending on network and traffic types. N may also depend on how much memory is used to cache results. It may be preferable to have a short tail of IP:port and/or transport layer volume to fit within the cache, and let the long tail miss the cache. As cache sizes are limited, it is normally preferable to fit frequently accessed data in the cache (for example, server IP: Port lookup) and allow for other parameters associated with this information (for example, statistics, protocol, DNS name) to be in a non-cached storage.

In addition to compute cost savings, the memory footprint savings will be equally powerful. A cache hit may simply use a reference to the previous classification results.

Conventionally, classification systems often need to send the flow record along with classification results to offline processing for statistics. This Input/Output is also intended to be reduced with embodiment of the system and method provided herein, if the transmission mechanism could refer to the classification results by cached result instead of raw records.

Embodiments of the system and method detailed herein are intended to benefit from application service providers usually using dedicated servers for their content. This may be because the servers are within their data center, or they have dedicated servers running in CDN's, or they have a set of IP address used. In some cases, there are Server IP:Port combinations (regardless of IP protocol) where a single application and single application activity is frequently seen or identified. If the system can identify these I P: Port with or with out IP:Protocol combinations with zero or low variability, the classification for such combinations could be done once or a few predetermined number of times, then remembered and stored in a memory component. Subsequent lookups could use the pre-classified results to reduce the CPU and memory cost of classification.

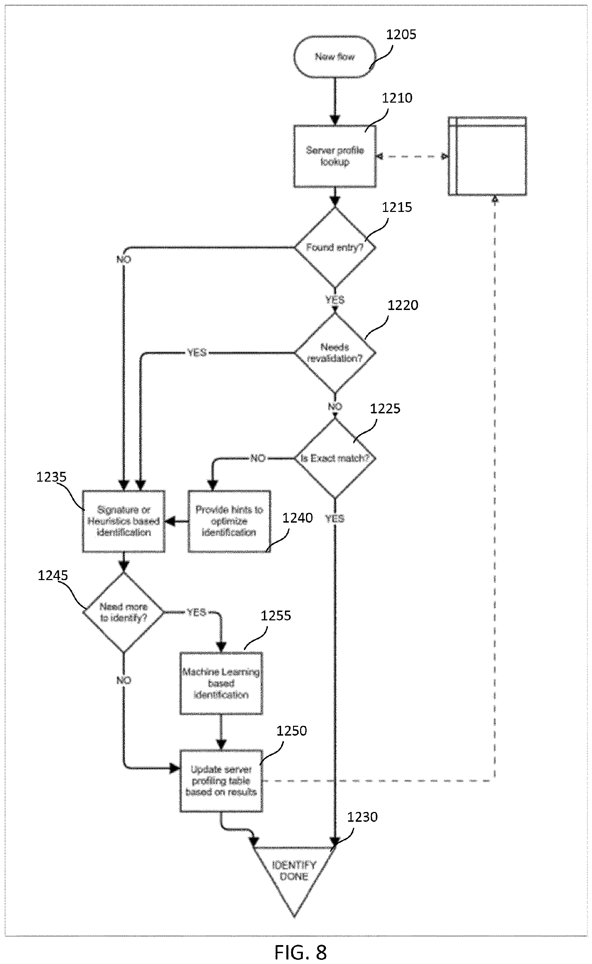

Figure 8 illustrates a flow chart on an embodiment of a method for classifying traffic flows using server profiling. The system receives a new flow, at 1205. The system is configured to then determine packet parameters of the flow such as, server IP, domain name, port, protocol, and the like. At 1210, the system is configured to perform a server profile lookup with a lookup table or database. The system determines whether there is an entry found, at 1215. If an entry is found, the system determines whether the server requires revalidation, at 1220. If no revalidation, the system determines whether the entry is an exact match at 1225 and if so, determines the classification of the flow based on the match, at 1230.

If there is no entry in the lookup table, or if it is determined that the entry needs to be revalidated, the system is configured to proceed to identify the flow via more conventional methods such as signature or heuristic based identification, at 1235. If there is a match that is not an exact match, the system is configured to provide hints to optimize the identification, at 1240. Hints may include, for example, a reduced number of possible applications or content categories that are associated with the server in question. If the conventional methods such as signature or heuristic based identification succeed at 1245, the system is configured to determine whether an update to the lookup table is required, at 1250. If the conventional methods are unable to identify the application at 1245, the system is configured to provide for machine learning identification at 1255. The lookup table is updated with the machine learning results at 1250 and the flow is considered identified if either the conventional methods or machine learning has provided an identification at 1230.

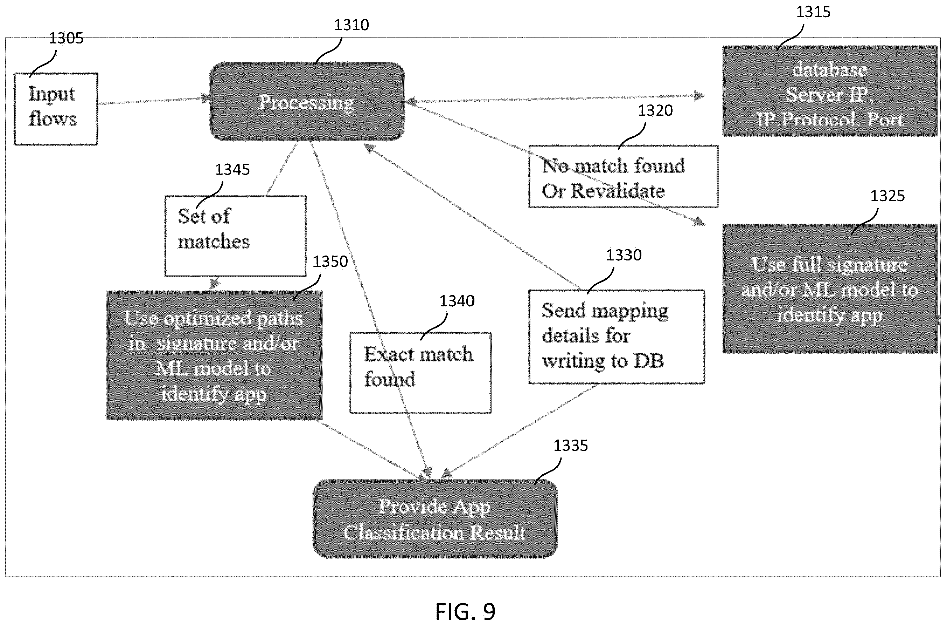

Figure 9 is a flow chart illustrating an embodiment of the classification of a traffic flow. At 1305 the system receives at least one flow to evaluate. The application module 1120 is configured to perform application recognition on the flows and establish packet parameters, for example, an IP, domain name, or IP/Domain name + Port, IP.Protocol and the like, at 1310. This data is used to classify the flow but may also be used by the monitoring module to detect, revalidate, or update any data currently stored in a look up database.

At 1315, the application module is configured to use the packet parameters to determine whether there is a match, and the flow is classified. In some cases, the flow may have a set of matches and not a direct match. If more than one application is noted in the initial lookup, at 1345, a more optimized version of signature pattern recognition or machine learning may be applied to identify the application. This is intended to provide for quicker and less costly classification, at 1350, as the possible applications have already been shortlisted.

If no match is found, at 1320, full signature recognition or machine learning models may be used to identify the application at 1335. If a match is found, at 1340, the system is configured to provide the application classification result to other network devices that require this information to correctly apply policies to the traffic flows or may apply policies through a traffic action module associated with the system.

The process for revalidating the lookup table is intended to be similar to classifying a flow. For a flow that is intended to be used for revalidating the stored data, the set of IP or IP+Port or I P+I P. Protocol+Port details from database are intended to be checked. In particular, once a flow is received, the system checks if the IP or IP + Port or IP+IP.Protocol+Port entry already exists in the database. If this information exists and is marked as suitable for identification, then the associated applications are identified directly. If there was no match found, or if IP or IP+Port or I P+I P. Protocol+Port was marked in database as unreliable, then the full classification method is run using signatures and / or Machine Learning. The output of running the full classification method will be used for updating the database. As an additional configuration option, the list of applications can be set based on tests done to establish if this method is suitable for them or not. The data within the database is configured to be re-evaluated on a periodic basis, for example on a time basis, every hour, every day, every week, or the like, or on a flow basis, every 10 flows, every 100 flows or the like.

During an initial deployment, the system can be configured to generate the database using a subset or sampling of flows. During this time, the system may be working only for priming. Priming may be used once the system has confirmed that the server profile is consistently delivering an application, which may be statistics counters of at least X flows (X is intended to configurable and may be in the range of 10 flows, 20 flows, 100 flows or the like) are used for identifying the application. Further, there is intended to be a mapping to server IP + port or IP+IP.Protocol+Port which is unique for the application. If the conditions have been met, the entries are marked suitable for lookup. The list of applications for which this feature will be used may be decided upfront so that the initial priming of the database can be done for the applications that have been tested to benefit from this feature. The system is configured to be able to be updated on a periodic basis using a similar process.

Embodiments of the system and method are configured to revalidate the flows. In a particular example, the monitoring module is configured to evaluate once every M flows for an application, or after a timeout. Since this is targeted at a specific application, first the application will be detected using the server IP + Port or IP+IP.Protocol+Port approach and then the same flow will be subjected to full classification method with signatures and machine learning to establish that the Server IP + Port or IP+IP.Protocol+Port is being used for the application. This method can then be done for M subsequent flows of the application, chosen contiguously or randomly. M is intended to configurable and may be in the range of 10 flows, 20 flows, 100 flows or the like.

If the count of flows that connect to specific server / port drops to 0 or a predetermined low number threshold (that is intended configurable), then the server IP and port is considered not in use and is intended to be marked for revalidation. If a specific IP is found to serve different applications and content, then it is marked so that no effort is made to update database for these specific IPs for example, having for a much higher timeout threshold.

In some cases, the lookup database is intended to be hosted in the cloud or a centralized location and deliverable to a plurality of operators. The database is updated periodically or continuously using Application recognition probes across the world. Copies of the database, or access to the database may be distributed to customers so that the initial priming time can be optimized. In this case, the priming may only revalidate a much smaller set of samples to check if the database entries are indeed the right ones for the Applications. The entries that could not be validated (for example, no UE connected to Server in the specific operator's network), then this type of entry could be marked for checking when such a flow is seen towards the noted IP and Port.

Whereas application classification can be done using IP + Port mapping, it may not always be possible to classify content based on IP + Port, because different types of contents might be multiplexed on same flow. Typically, this requires machine learning. However, the same approach can also be used for optimizing content classification. When an application uses a flow for N contents, then the system is configured to store these as part of database to indicate what type of contents are being stored. It is possible that applications use different flows for different contents, and where this is the case, the lookup is intended to help optimize the determination of the various options. When the same flow is used for different contents, then the IP + Port mapping can still help optimize the classification as there is a smaller subset to run. In a specific example, if IP+Port1 had 3 types of content and IP + Port2 had 2 other types of content, then the system is able to determine that for IP+Port1, there is likely only 3 options, and the method stores states and content classification for 3 instead of a larger number.

In some cases, whenever there is a DNS flow that is received which corresponds to a known server IP address and if there is a change from the known list of domains, this could indicate that the server is re-provisioned for something else. With this result, the system is configured to determine that the lookup may be to re-evaluate the entries for the server IP and start profiling newly. Similarly, every nth packet or after every x time frame, the entire profile may be re-evaluated for accuracy. This is intended to ensure the system always learns and keep learning new information about the server and dynamically profiling its nature. It will be understood that these are not the only situations where reevaluation is intended to occur.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method for classifying a traffic flow comprising:
initializing a database with packet parameters;
identifying a new flow;
determining packet parameters associated with the new flow;
determine whether the packet parameters match any previously stored packet parameters in the database;
if the packet parameters match, determining an application classification for the traffic flow.

2. The method of claim 1 wherein the packet parameters comprise server's Internet Protocol (IP) address and port number.

3. The method of claim 1 or 2 further comprising:
determining if the previously stored packet parameters require revalidating;
reviewing the previously stored packet parameters with current traffic flows; and
updating the previously stored packet parameters with parameters from the current traffic flows.

4. The method of claim 3 wherein the previously stored packet parameters require revalidating at a predetermined time interval.

5. The method of claim 3 wherein the previously stored packet parameters require revalidating after a predetermined number of matched traffic flows.

6. The method of any one of claims 1 to 5 wherein the previously stored packet parameters are determined in a lab setting and verified against real time traffic flows.

7. A system for classifying a traffic flow comprising:
a server profiling module configured to initialize a database with packet parameters;
an application module configured to identify a new flow, determine packet parameters associated with the new flow, determine whether the packet parameters match any previously stored packet parameters in the database and determine an application classification for the traffic flow.

8. The system of claim 7 wherein the server profiling module is configured to determine packet parameters comprising server's Internet Protocol (IP) address and port number.

9. The system of claim 7 or 8 further comprising wherein the server profiling is configured to:
determine if the previously stored packet parameters require revalidating;
review the previously stored packet parameters with current traffic flows; and
update the previously stored packet parameters with parameters from the current traffic flows.

10. The system of claim 9 wherein the previously stored packet parameters require revalidating at a predetermined time interval.

11. The system of claim 9 wherein the previously stored packet parameters require revalidating after a predetermined number of matched traffic flows.

12. A method for detecting a change in the classification of an application and/or content in a traffic flow, the method comprising:
determining an application change in the application behavior;
detecting a category change in a content category of the application; and
providing an updated traffic action based on the detected change.

13. The method of claim 12 wherein detecting an application change or a content change comprises:
determining packet flow parameters associated with the traffic flow; and
detecting a change in the traffic flow parameters associated with the traffic flow.

14. The method of claim 12 or 13 wherein the packet parameters comprise: volume of traffic, data rate, location, region, timestamps.

15. The method of any one of claims 12 to 14 wherein detecting a change comprises detecting an increase or decrease in bit rate, packet rate or connections count.
